**Europäisches Patentamt**

**European Patent Office**

**Office européen des brevets**

(19)

(11) Veröffentlichungsnummer: **0 170 910**
**B1**

(12)

# EUROPÄISCHE PATENTSCHRIFT

(45) Veröffentlichungstag der Patentschrift:
08.03.89

(21) Anmeldenummer: 85108500.1

(22) Anmeldetag: 09.07.85

(51) Int. Cl.⁴: **A 47 J 27/16**

(54) **Vorrichtung zum Behandeln von Speisen mit Dampf.**

(30) Priorität: 01.06.84 DE 8422834 U

(43) Veröffentlichungstag der Anmeldung:
12.02.86 Patentblatt 86/7

(45) Bekanntmachung des Hinweises auf die Patenterteilung:
08.03.89 Patentblatt 89/10

(84) Benannte Vertragsstaaten:
AT BE CH DE FR GB IT LI LU NL SE

(56) Entgegenhaltungen:
FR-A-2 458 260
GB-A-573 512
GB-A-770 790
GB-A-2 055 934
US-A-3 449 770

(73) Patentinhaber: LechMetall Landsberg GmbH,
Iglinger Strasse 62, D-8910 Landsberga. Lech (DE)

(72) Erfinder: Meister, Siegfried, Siemensstrasse 2,
D-8910 Landsberg a. Lech (DE)

(74) Vertreter: Goddar, Heinz J., Dr., FORRESTER &
BOEHMERT Widenmayerstrasse 4/I, D-8000
München 22 (DE)

EP 0 170 910 B1

## Beschreibung

Die Erfindung betrifft eine Vorrichtung zum Behandeln von Speisen mit Dampf, mit einem Garraum, in den eine Dampfzufuhrleitung mündet und an dessen offener Frontseite eine Tür angelenkt ist, sowie mit einer Auffangwanne für Dampf-Kondensat unterhalb der Garraumzugangsöffnung.

Diese in der Deutschen Gebrauchsmusterschrift 8131827 beschriebene Vorrichtung enthält einen Dampferzeuger, der bei Einstellung des Geräts·auf "Dämpfen" über die Dampfzufuhrleitung Dampf in den Garraum bläst. Wenn in dem Garraum eine hinreichend niedrige Temperatur herrscht, schlägt sich der Dampf nicht nur auf den im Garraum befindlichen Speisen, sondern auch an den Wänden und insbesondere an der Tür-Innenseite nieder und kondensiert dort zu Wasser, welches an den Wänden und der Tür herabläuft. Dieses Dampf-Kondensat sammelt sich bei geschlossenem Garraum auf dessen Boden und wird über ein Ablaufrohr einer Abwasserleitung zugeführt.

Wenn die Tür des Garraums geöffnet wird, tropft bei dem bekannten Dämpfer das an der Tür-Innenseite kondensierte Wasser unkontrolliert auf den Fußboden, was nicht nur aus hygienischen Grunden, sondern auch wegen möglicher Unfallgefahr unerwünscht ist.

Mit der Erfindung soll daher die eingangs genannte Vorrichtung derart verbessert werden, daß das an der Tür- Innenfläche ablaufende Kondenswasser bei geöffneter Tür gesammelt wird.

Die gestellte Aufgabe wird erfindungsgemäß mit einer Vorrichtung mit den Merkmalen des Anspruchs 1 gelöst.

Damit wird erreicht, daß das an der offenen Tür ablaufende Kondenswasser aufgefangen wird und dem Wasserablauf zugeführt werden kann, so daß eine Verschmutzung des Aufstellungsortes der Vorrichtung vermieden wird.

Um die Ableitung des Kondenswassers aus der Rinne in die Auffangwanne möglichst kompakt zu gestalten, ist in Weiterbildung der Erfindung vorgesehen, daß die Mittellinie der Ablauföffnung mit der Schwenkachse der Tür fluchtet.

Die Rinne kann entweder an die untere Leiste der Tür unmittelbar angeformt sein, oder kann alternativ als ein von der Tür separates Bauteil mit dem Türrahmen verschraubt oder verschweißt oder verklemmt sein.

Die Erfindung wird nachstehend anhand des in der beigefügten Zeichnung dargestellten Ausführungsbeispiels im einzelnen beschrieben
Es zeigen:

Fig. 1 eine schematische perspektivische Ansicht eines mit den Merkmalen der Erfindung ausgestatteten Dämpfers;
Fig. 2 eine vergrößerte Detailansicht des Dämpfers nach Fig. 1 bei geöffneter Tür und

Fig. 3 eine schematische Schnittansicht durch die Befestigungsvorrichtung der Tür-Abtropfrinne.

Der im ganzen mit 1 bezeichnete Combi-Dämpfer besitzt an seiner Frontseite 2 eine Schalttafel 4 mit mehreren Bedienungsorganen für die einzelnen, wählbaren Betriebsarten des Combi-Dämpfers. Zu den Bedienungsorganen gehört ein Schalter 6, der auf die Betriebsart "dämpfen" eingestellt werden kann.

Neben der Schalttafel 4 befindet sich die Zugangstür 10 zu einem Garraum 12, die die Beschickung des Garraums 12 mit auf nicht dargestellten Horden abgelegten Speisen, die im Garraum beispielsweise gedämpft werden sollen, ermöglicht.

Neben dem Garraum 12 und hinter der Schalttafel 4 sind die elektrische Steuerung und ein Dampferzeuger untergebracht, wie im einzelnen in der Gebrauchsmusterschrift G 81 31 827 beschrieben ist. Der Dampferzeuger ist mit dem Inneren des Garraumes 12 über eine Dampfzufuhrleitung verbunden.

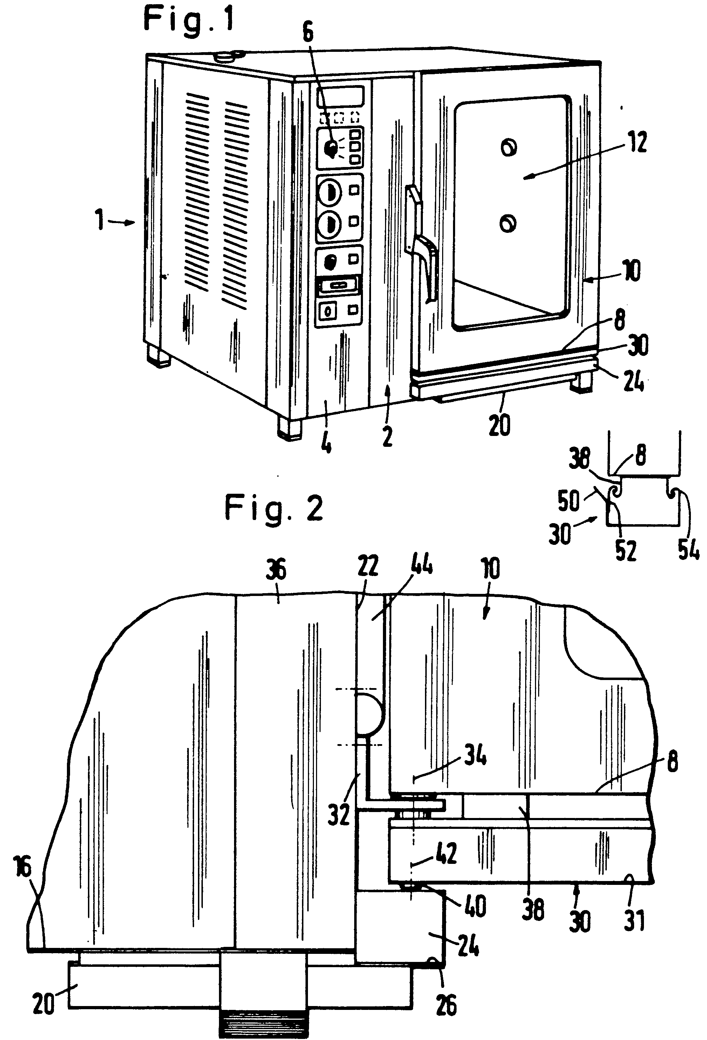

Unter dem Bodenblech 16 des Combi-Dämpfers ist eine Wanne 20 für Dampfkondensat aufgehängt, die sich gemäß Fig. 2 im Bereich der Zugangstür 10 geringfügig vor die Frontwand 22 des Combi-Dämpfers 1 erstreckt.

Auf der Frontwand 22 ist ferner unterhalb der vorderen Öffnung des Garraumes eine Auffangwanne 24 von rechteckigem Querschnitt befestigt. Die nach oben offene Auffangwanne erstreckt sich gemäß Fig. 1 parallel zu und unterhalb der unteren Leiste 8 der geschlossenen Zugangstür 10, läßt zu dieser jedoch Abstand för die nachstehend im einzelnen beschriebene Tür-Abtropfrinne 30. Der Boden 26 der Auffangwanne enthält eine nicht dargestellte Öffnung, die in der Wanne 24 aufgefangenes Wasser oder Fett in die Wanne 20 ableitet.

Gemäß Fig. 2 ist die Zugangstür 10 in der Bohrung eines Scharnierwinkels 32 um die Hochachse 34 drehbar gelagert. Der Scharnierwinkel 32 ist an einem seitlichen Pfosten 36 des Dämpfergehäuses verschraubt.

An der unteren Leiste 8 der Zugangstür 10 ist eine nach oben offene, kastenförmige, langgestreckte Tür-Abtropfrinne 30 mittels Laschen 38 befestigt. Die Rinne 30 erstreckt sich über die gesamte Breite der Zugangstür und steht über die Innenfläche der Zugangstür 10 geringfügig vor, so daß an der Innenfläche der Zugangstür 10 ablaufendes Kondenswasser in die Rinne 30 abtropfen kann.

Aus Fig. 2 ist weiterhin zu erkennen, daß im Boden 31 der Rinne 30 eine Ablauföffnung 40 an einer Stelle vorgesehen ist, die unterhalb der Bohrung des abstehenden Schenkels des Scharnierwinkels 32 liegt. Die Mittellinie 42 der Ablauföffnung 40 fluchtet mit der Hochachse 34, um die die Tür 10 schwenkbar ist. Damit wird erreicht, daß die Ablauföffnung 40 bei jeder Schwenkstellung der Tür 10 an der gleichen Stelle verbleibt. Die Ablauföffnung 40 öffnet in die Auffangwanne 24, so daß in der Tür-Abtropfrinne 30 aufgefangenes Kondenswasser durch die Ablauföffnung 40 in die Auffangwanne 24 gelangen kann. Aus der Auffangwanne 24 kann das Kondenswasser durch die erwähnte Öffnung in deren Boden 26 in der Wanne 20 gesammelt und die Wanne 20 nach Herausziehen aus ihrer Aufhängung entleert werden. Alternativ kann die Öffnung der im Boden 26 der Auffangwanne 24 über eine nicht dargestellte Ablaufleitung unmittelbar mit dem Wasserablaufanschluß des Combi-Dämpfers 1 verbunden sein.

Zur Befestigung der Tür-Abtropfrinne 30 an der unteren Leiste 8 der Tür 10 sind an der Leiste beispielsweise zwei im Querschnitt U-förmige Laschen 38 mit ihrer Basisfläche verschweißt. Jeder der nach unten weisenden Schenkel der Lasche 38 ist am Ende nach außen umgebördelt.

Der äußere Längsrand 54 der Rinne 30 ist nach innen umgebördelt und kann in das Ende des äußeren Schenkels der Lasche 38 eingreifen. Der innere Längsrand 50 der Rinne 30 ist, bezüglich der Rinne 30 nach außen abgeschrägt und steht dadurch über die Innenfläche der Tür 10 zum Auffangen der ablaufenden Tropfen vor, wenn die Rinne 30, wie dargestellt, in die Laschen 38 eingehängt ist.

Beispielsweise zwei Haken 52 sind am Längsrand 50 befestigt und können in die umgebördelten Enden des inneren Schenkels der Laschen 38 eingreifen. Die Abtropfrinne 30 kann daher von der Schloßseite der Tür 10 auf die Laschen 38 bis zu einem nicht dargestellten Anschlag, gegebenenfalls in ihrer Endstellung einrastend, aufgeschoben werden. Gemäß Fig. 2 ist die Garraum-Zugangsöffnung mit einer Dichtwulst 44 zweckmäßig allseits umgeben. Beim Schließen der Tür 10 hält daher deren Innenwand einen solchen Abstand von der Frontwand 22, daß der innere Längsrand 50 über die Innenfläche der Tür 10 ohne Konflikt mit der Frontwand 22 vorstehen kann.

Es liegt jedoch auch im Rahmen der Erfindung, die untere Leiste 8 der Tür 10 als ein Hohlprofil derart auszubilden, daß die Abtropfrinne 30 integraler Bestandteil des Hohlprofils ist.

## Patentansprüche

1. Vorrichtung zum Behandeln von Speisen mit Dampf, mit einem Garraum, in den eine Dampfzufuhrleitung mündet und an dessen offener Frontseite eine Tür (10) angelenkt ist, sowie mit einer Auffangwanne (24) für Dampf-Kondensat unterhalb der Garraum-Zugangsöffnung, dadurch gekennzeichnet, daß an der unteren Leiste (8) der Tür (10) eine sich längs der Türbreite erstreckende Rinne (30) ausgebildet ist, die über die Innenfläche der Tür vorsteht und in der Nähe des unteren Türscharniers (32) über der Auffangwanne (24) eine Ablauföffnung (40) aufweist.

2. Vorrichtung nach Anspruch 1, dadurch gekennzeichnet, daß die Mittellinie (42) der Ablauföffnung (40) mit der Schwenkachse (34) der Tür (10) fluchtet.

3. Vorrichtung nach Anspruch 1 oder 2, dadurch gekennzeichnet, daß die Rinne (30) an der unteren Leiste (8) der Tür (10) unmittelbar angeformt ist.

4. Vorrichtung nach einem der Ansprüche 1 - 3, dadurch gekennzeichnet, daß die Rinne (30) als ein von der Tür (10) separates Bauteil mit dem Türrahmen verschraubt, verschweißt oder verklemmt ist.

5. Vorrichtung nach einem der vorstehenden Ansprüche, dadurch gekennzeichnet, daß die Rinne (30) auf an der unteren Leiste (8) der Tür (10) befestigten Laschen (38) seitlich aufgeschoben ist.

## Claims

1. An apparatus for the steam treatment of food and comprising a cooking chamber to which a steam supply line extends, a door (10) being pivoted to the open front of the chamber, the apparatus also comprising a collecting trough or tray or the like (24) for steam condensate below the access opening of the cooking chamber, characterised in that a trough (30) which extends along door width is devised on the bottom ledge (8) of the door (10), projects beyond the door inside surface and is formed with a drain opening (40) near the bottom door hinge (32) above the tray or trough (24).

2. An apparatus according to claim 1, characterised in that the centre-line (42) of the drain opening (40) registers with the pivot axis (34) of the door (10).

3. An apparatus according to claim 1 or 2, characterised in that the trough (30) is formed directly on the bottom door ledge (8).

4. An apparatus according to any of claims 1 - 3, caracterised in that the trough (30), as a component separate from the door (10), is screwed or welded or clamped thereto.

5. An apparatus according to any of the previous claims, characterized in that the trough (30) is pushed laterally on to blocks or lugs or the like (38) secured to the bottom door ledge (8).

## Revendications

1. Appareil pour le traitement des aliments à la vapeur, comportant une enceinte de traitement dans laquelle débouche une conduite d'amenée de vapeur et sur la face frontale ouverte de laquelle est articulée une porte (10), et une cuve collectrice (24) pour le condensat de vapeur, sous l'ouverture d'introduction de l'enceinte, caractérisé par le fait que sur la bordure inférieure (8) de la porte (10) est formée une gouttière (30) s'étendant sur la largeur de la porte, qui fait saillie par rapport à la surface intérieure de la porte et présente, au voisinage de la charnière de porte inférleure (32), un orifice d'écoulement (40) au-dessus de la gouttière collectrice (24).

2. Appareil selon la revendication 1, caractérisé par le fait que l'axe (42) de l'orifice d'écoulement (40) est dans l'alignement de l'axe de pivotement (34) de la porte (10).

3. Appareil selon la revendication 1 ou 2, caractérisé par le fait que la gouttière (30) est formée directement sur la bordure inférieure (8) de la porte (10).

4. Appareil selon l'une des revendications 1 à 3, caractérisé par le fait que la gouttière (30) est, en tant que pièce séparée de la porte (10), fixée au chassis de la porte par vissage, soudure ou serrage.

5. Appareil selon l'une des revendications précédentes, caractérisé par le fait que la gouttière (30) est accrochée latéralement à des attaches (38) fixées à la bordure inférieure (8) de la porte (10).

EP 0 170 910 B1

**Fig.1**

**Fig. 2**